(19) Europäisches Patentamt
European Patent Office
Office européen des brevets

(11) **EP 2 137 021 B1**

(12) **EUROPÄISCHE PATENTSCHRIFT**

(45) Veröffentlichungstag und Bekanntmachung des Hinweises auf die Patenterteilung:
**11.04.2012   Patentblatt 2012/15**

(21) Anmeldenummer: **08749596.6**

(22) Anmeldetag: **17.04.2008**

(51) Int Cl.:
**B60K 35/00** *(2006.01)*      **B60K 37/02** *(2006.01)*

(86) Internationale Anmeldenummer:
**PCT/EP2008/054687**

(87) Internationale Veröffentlichungsnummer:
**WO 2008/125695 (23.10.2008 Gazette 2008/43)**

(54) **VERFAHREN ZUM AUSWÄHLEN EINES LISTENEINTRAGS UND BEDIENEINRICHTUNG HIERFÜR**

METHOD FOR THE SELECTION OF A LIST ITEM AND OPERATING DEVICE FOR PERFORMING SAID METHOD

PROCEDE POUR SELECTIONNER UN ELEMENT DE LISTE ET DISPOSITIF DE SERVICE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.04.2007   DE 102007018076**

(43) Veröffentlichungstag der Anmeldung:
**30.12.2009   Patentblatt 2009/53**

(73) Patentinhaber: **VOLKSWAGEN AG**
**38436 Wolfsburg (DE)**

(72) Erfinder:
• **DEHMANN, Rainer**
  **10963 Berlin (DE)**
• **NEUNER, Helge**
  **38300 Wolfenbüttel (DE)**
• **RINGEL, Stephan**
  **38442 Wolfsburg (DE)**
• **BOENKER, Martin**
  **38126 Braunschweig (DE)**

(74) Vertreter: **Reitstötter - Kinzebach**
**Patentanwälte**
**Sternwartstrasse 4**
**81679 München (DE)**

(56) Entgegenhaltungen:
**WO-A-02/40307      DE-A1- 10 056 307**

**Beschreibung**

Die vorliegende Erfindung betrifft ein Verfahren zum Auswählen eines Listeneintrags aus einer Liste mit mehreren Listeneinträgen mittels einer Bedieneinrichtung und einer Anzeigevorrichtung zum Anzeigen von den Betrieb des Fahrzeugs betreffende Informationen. Dabei sind den Listeneinträgen jeweils Zusatzinformationen zugeordnet. Ferner betrifft die Erfindung eine Bedieneinrichtung in einem Fahrzeug mit einem Bedienelement zum Auswählen eines Listeneintrags aus einer Liste mit mehreren Listeneinträgen und einer Anzeigeeinrichtung zum Anzeigen von den Betrieb des Fahrzeugs betreffende Informationen. Die Anzeigeeinrichtung umfasst eine Steuereinrichtung, welche mit dem Bedienelement datentechnisch gekoppelt ist und welche die Anzeige steuert.

Die Anzahl von Informationen, die einem Fahrzeugführer aufgrund der steigenden Anzahl von Komforteinrichtungen angezeigt werden steigt ständig. Zu den Komforteinrichtungen, die in modernen Fahrzeugen eingesetzt werden zählen Navigationseinrichtungen, Telekommunikationseinrichtungen, Fahrerassistenzsystemen und Warnhinweise zu eine Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedienund Anzeigeeinrichtungen in der Mittelkonsole angeordnet. Des Weiteren weisen solche Fahrzeuge ein so genanntes Kombünstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombünstrumente neben herkömmlichen Rundinstrumenten auch frei programmierbare Displays auf, welche Informationen einer Navigationseinrichtung, einer Telekommunikationseinrichtung und insbesondere der Fahrerassistenzsysteme darstellen. Die Darstellung umfassender Informationen im Kombiinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombünstrument dargestellt werden, ergibt sich allerdings das Problem, dass der Fahrzeugführer die gewünschte Information nicht mehr schnell und intuitiv erfassen kann und von der Informationsfülle auf dem Display des Kombiinstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombiinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann. Gleichzeitig sollten solche Informationen angezeigt werden, die für den Fahrzeugführer in der jeweiligen Fahrsituation besonders relevant sind.

Werden im Fahrzeug komplexe Bedienstrukturen, wie z. B. tief verschachtelte Menüstrukturen verwendet, ergibt sich das Problem, dass es relativ lange dauert, bestimmte Bedienabläufe durchzuführen. Falls beispielsweise die Menüs in einer Baumstruktur aufgebaut sind, ist es erforderlich, dass der Nutzer zunächst aus einer Liste, aus mehreren Listeneinträgen einen bestimmten gewünschten Listeneintrag auswählt. Daraufhin wird ihm ggfs. eine neue Liste angezeigt, aus der ein Listeneintrag ausgewählt werden kann. Da die Bedienung u. a. auch während der Fahrt ausgeführt werden soll, ist es besonders wichtig, dass die Bedienung mit so wenig aktiven Bedienschritten des Nutzers wie möglich ausgeführt wird, um eine übermäßige Ablenkung des Fahrzeugführers zu vermeiden. Des Weiteren ist es wichtig, dem Nutzer während der Bedienung eine visuelle Unterstützung zu geben, damit er sich leicht in der Bedienstruktur orientieren kann und die Bedienung damit intuitiv, schnell und ohne Ablenkung ausführen kann.

Aus der WO 02/40307 A1 ist eine Multifunktions-Bedieneinrichtung bekannt, welche ein bidirektionales Drehelement aufweist, welches zur An- und Auswahl von Funktionsgruppen und Funktionen innerhalb einer auf einer Anzeigeeinrichtung darstellbaren Menüstruktur dient. Eine weitere solche Multifunktions-Bedieneinrichtung ist aus der DE 100 56 307 A1 bekannt.

Es ist die Aufgabe der vorliegenden Erfindung, ein Verfahren und eine Bedieneinrichtung der eingangs genannten Art bereitzustellen, mit denen ein Listeneintrag aus einer Liste mit mehreren Listeneinträgen mit wenig Bedienschritten einfach und intuitiv ausgewählt werden kann.

Diese Aufgabe wird durch ein Verfahren mit den Merkmalen des Anspruchs 1 und eine Bedieneinrichtung mit den Merkmalen des Anspruchs 7 gelöst. Vorteilhafte Aus- und Weiterbildungen ergeben sich aus den Unteransprüchen.

Bei dem erfindungsgemäßen Verfahren wird durch eine Betätigung des Bedienelements ein bestimmter Listeneintrag in einen Zustand gebracht, in dem er gegenüber zumindest einem anderen Listeneintrag hervorgehoben dargestellt wird und der hervorgehobene Listeneintrag wird automatisch ausgewählt, wenn das Bedienelement für ein definiertes Zeitintervall nicht betätigt wurde.

In einer Liste werden im wesentlichen zusammengehörige Parameter zusammengefasst, die den Betrieb des Fahrzeugs betreffen. Vorzugsweise sind mehrere Listen vorgesehen, wobei zwischen den Listen mittels eines zweiten separaten Bedienelements umgeschaltet werden kann.

Bei dem erfindungsgemäßen Verfahren erfolgt die Auswahl eines Listeneintrags nur dadurch, dass der Listeneintrag in einen hervorgehobenen Zustand gebracht wird und das Bedienelement danach für ein gewisses Zeitintervall nicht betätigt wird. Im Vergleich zu herkömmlichen Auswahlverfahren, bei denen der Listeneintrag in eine hervorgehobene Stellung gebracht wird und danach durch Betätigung desselben oder eines weiteren Bedienelements ausgewählt wird, ergibt sich bei dem erfindungsgemäßen Verfahren der Vorteil, dass der Nutzer weniger Bedienschritte ausführen muss. Dies ist insbesondere bei dem Einsatz des erfindungsgemäßen Auswahlverfahrens im Fahrzeug vorteilhaft, da der Fahrzeugführer, nachdem er den gewünschten Listeneintrag in die hervorgehobene Stellung gebracht hat, bereits den Blick von einem Display der Anzeigeeinrichtung abwenden kann und auch kein Bedienelement mehr betätigen muss. Der eigentliche Bedienvorgang zum Auswählen des Listeneintrags kann daher sehr schnell ausgeführt werden, selbst wenn die Auswahl des Listeneintrags in Abhängigkeit von der Länge des Zeitintervalls möglicherweise länger dauert als bei herkömmlichen Auswahlverfahren.

Gemäß einer bevorzugten Weiterbildung des erfindungsgemäßen Verfahrens wird in einem Ausgangszustand ein Listeneintrag und ggfs. die zu diesem Listeneintrag zugeordnete Zusatzinformation angezeigt. Durch eine erste Betätigung des Bedienelements wird der Listeneintrag des Ausgangszustands und zumindest ein weiterer Listeneintrag dargestellt, wobei der Listeneintrag des Ausgangszustands gegenüber dem anderen Listeneintrag hervorgehoben dargestellt wird. Durch die Darstellung des weiteren Listeneintrags kann sich der Nutzer leichter in der Datenstruktur der Liste orientieren, da zumindest eine weitere Auswahlmöglichkeit der Liste angezeigt wird. Bevorzugt werden ein folgender und ein vorhergehender Listeneintrag, besonders bevorzugt zwei folgende und zwei vorhergehende Listeneinträge angezeigt.

Gemäß einer weiteren Ausgestaltung des erfindungsgemäßen Verfahrens werden im Ausgangszustand der Listeneintrag und die zu diesem Listeneintrag zugeordneten Zusatzinformationen angezeigt. Durch die erste Betätigung des Bedienelements verschwindet die Zusatzinformation und der Listeneintrag des Ausgangszustands und zumindest ein diesem Listeneintrag folgender und zumindest ein zu diesem Listeneintrag vorhergehender Listeneintrag werden dargestellt, wobei der Listeneintrag des Ausgangszustands gegenüber den anderen Listeneinträgen hervorgehoben dargestellt wird. Durch Betätigung des Bedienelements kann der Nutzer die anderen Listeneinträge in den hervorgehobenen Zustand bringen.

Nach der Auswahl des Listeneintrags wird die diesem Listeneintrag zugeordnete Zusatzinformation automatisch angezeigt. In diesem Fall können z. B. die weiteren Einträge der Liste nicht mehr dargestellt werden.

Nach dem erfindungsgemäßen Verfahren verändern sich die Positionen der dargestellten Listeneinträge, wenn ein Listeneintrag durch die Betätigung des Bedienelements in den Zustand gebracht wird, in dem er gegenüber zumindest einem anderen Listeneintrag hervorgehoben dargestellt wird. Ferner können bei einer Veränderung der Positionen der Listeneinträge bestimmte Listeneinträge verschwinden und neue Listeneinträge dargestellt werden. Bei der Veränderung der Position eines Listeneintrags wandert dieser von einem ersten Teilbereich des Anzeigebildes zu einem zweiten Teilbereich des Anzeigebildes. Bei diesem Übergang von einem Ausgangszustand zu einem Endzustand werden Zwischenbilder angezeigt. Gemäß einer bevorzugten Ausgestaltung des erfindungsgemäßen Verfahrens wird die Position aufeinanderfolgend der Zwischenbilder wie folgt berechnet:

$$P1_{n+1} = P1_n + (P1_m - P1_n) * F1,$$

wobei n eine natürliche Zahl ist und von 0 bis m läuft, $P1_0$ die Position des Listeneintrags im Ausgangszustand ist, $P1_m$ die Position des Listeneintrags im Endzustand ist und F1 ein Transformationsparameter ist. Für diesen Transformationsparameter gilt

$$0 < F1 < 2.$$

Der Transformationsparameter F1 ist jedoch insbesondere ungleich 1.

Gemäß einer bevorzugten Weiterbildung des erfindungsgemäßen Verfahrens verändert sich beim Übergang eines Listeneintrags von einem nicht hervorgehobenen Zustand in einen hervorgehobenen Zustand die Helligkeit und/ oder die Skalierung und/oder die Farbe und/oder die Transparenz von einem Ausgangszustand zu einem Endzustand, wobei sich ein Bildparameter für die Helligkeit und/oder die Skalierung und/oder die Farbe und/oder die Transparenz verändert, der wie folgt berechnet wird:

$$P2_{n+1} = P2_n + (P2_m - P2_n) * F2,$$

wobei n eine natürliche Zahl ist und von 0 bis m läuft, $P2_0$ der Bildparameter des Listeneintrags im Ausgangszustand

ist, $P2_m$ der Bildparameter des Listeneintrags im Endzustand ist und F2 ein Transformationsparameter ist, für den gilt:

$$0 < F2 < 2.$$

Der Transformationsparameter F2 ist jedoch insbesondere ungleich 1.

Mit der Weiterbildung des erfindungsgemäßen Verfahrens kann eine Veränderung des Anzeigebildes erzeugt werden, welche sich an vielfältige Anzeigeinhalte anpassen lässt und bei welcher der Betrachter die Veränderung leicht nachvollziehen kann, so dass ihm die Orientierung im neuen Anzeigebild erleichtert wird. Auf diese Weise kann er die im neuen Anzeigebild dargestellte Information schnell und intuitiv erfassen.

Mittels des Transformationsparameters F1 bzw. F2 kann festgelegt werden, wie schnell sich ein Listeneintrag vom Ausgangszustand in bestimmten Bereichen dem Endzustand annähert. Ist der Transformationsparameter zwischen 0 und 1 ergibt sich eine rasche Annäherung an den Endzustand mit abschließender Verzögerung. Kleinere Werte des Transformationsparameters führen dabei zu einer langsameren Annäherung als größere Werte des Transformationsparameters.

Für eine langsame Annäherung an den Endzustand hat sich für die Wiedergabe von Informationen in einem Fahrzeug für den Transformationsparameter F1 bzw. F2 ein Bereich von 0,15 bis 0,25 als bevorzugt ergeben, wobei für eine langsame Annäherung ein Transformationsparameter von 0,2 besonders bevorzugt ist.

Für eine mittlere Annäherung an den Endzustand hat sich für die Darstellung von Informationen in einem Fahrzeug ein vorteilhafter Bereich von 0,45 bis 0,55 für den Transformationsparameter ergeben, wobei ein Wert von 0,5 bevorzugt ist.

Für eine schnelle Annäherung an den Endzustand hat sich für die Darstellung von Informationen in einem Fahrzeug für den Transformationsparameter ein Bereich von 0,88 bis 0,92 als vorteilhaft herausgestellt, wobei ein Wert von 0,9 bevorzugt ist.

Für Werte des Transformationsparameters, die zwischen 1 und 2 liegen, ergibt sich eine oszillierende Annäherung an den Endzustand mit abschließender Verzögerung. Bei derartigen oszillierenden Annäherungen hat sich bei der Darstellung von Informationen in einem Fahrzeug als vorteilhaft herausgestellt, wenn der Transformationsparameter zwischen 1,25 und 1,35 liegt, wobei der Wert 1,3 bevorzugt ist, oder zwischen 1,45 und 1,55 liegt, wobei in diesem Fall 1,5 bevorzugt ist.

Gemäß einer Weiterbildung des erfindungsgemäßen Verfahrens ändert sich der Transformationsparameter F1 bzw. F2 zeitlich, es gilt somit F = F (n), wenn n den Index für zeitlich aufeinanderfolgende Zwischenbilder angibt.

Bei der Auswahl des Transformationsparameters sind die Besonderheiten bei der Anzeige von Informationen im Fahrzeug zu berücksichtigen. Es hat sich herausgestellt, dass herkömmliche Veränderungen des Anzeigebildes, wie sie bei konventionellen Graphiken verwendet werden, bei einer Verwendung im Fahrzeug nachteilhaft sind, da sie entweder eine zu große Aufmerksamkeit des Betrachters erfordern oder eine Orientierung erschweren, wenn der Betrachter beim Übergang den Blick zwischenzeitlich abwendet. Es hat sich herausgestellt, dass die vorstehend angegebene Berechnungsformel für den Bildparameter und die angegebenen Wertebereiche und Werte des Transformationsparameters für eine Anwendung in einem Fahrzeug, insbesondere einem Kraftfahrzeug, besonders bevorzugt sind.

Die erfindungsgemäße Bedieneinrichtung ist dadurch gekennzeichnet, dass die Steuereinrichtung so ausgebildet ist, dass bei einer Betätigung des Bedienelements ein bestimmter Listeneintrag in einen Zustand bringbar ist, in dem er gegenüber zumindest einem anderen Listeneintrag hervorgehoben dargestellt wird, und dass eine Auswahleinheit vorgesehen ist, die eine Zeitmesseinheit aufweist, mit der erfassbar ist, wie lange das Bedienelement nicht betätigt wurde, wobei die Auswahleinheit so ausgebildet ist, dass sie den hervorgehobenen Listeneintrag automatisch auswählt, wenn das Bedienelement für ein definiertes Zeitintervall nicht betätigt wurde.

Die Steuereinrichtung ist so ausgebildet, dass die Positionen der dargestellten Listeneinträge veränderbar sind, wenn ein Listeneintrag durch die Betätigung des Bedienelements in den Zustand gebracht wird, indem er gegenüber zumindest einem anderen Listeneintrag hervorgehoben dargestellt wird.

Auch bei einer bevorzugten Ausgestaltung der erfindungsgemäßen Anzeigeeinrichtung kann mit der Steuereinrichtung die Anzeigeeinrichtung so ansteuerbar sein, dass sich bei einer Veränderung der Position eines Listeneintrags der Bildparameter wie vorstehend erläutert verändert. Ferner kann sich die Helligkeit und/oder die Skalierung und/oder die Farbe und/oder die Transparenz wie vorstehend erläutert verändern.

Das Bedienelement kann z. B. ein Drehschalter oder ein Wippschalter sein. Bevorzugt ist es ein Endlosdrehschalter.

Die Erfindung wird nun anhand eines Ausführungsbeispiels mit Bezug zu den Zeichnungen erläutert.

Figur 1    zeigt schematisch die Anordnung eines Ausführungsbeispiels der erfindungsgemäßen Anzeigeeinrichtung in einem Fahrzeug,

Figur 2          zeigt den Aufbau eines Ausführungsbeispiels der erfindungsgemäßen Anzeigeeinrichtung,

Figur 3          zeigt die Anordnung des Displays, des Rundinstruments und der Kombinationseinrichtung eines Ausführungsbeispiels der erfindungsgemäßen Anzeigeeinrichtung,

die Figuren 4 bis 10    zeigen die Anzeige des Displays bei der Auswahl eines anderen Listeneintrags gemäß einem Ausführungsbeispiel des erfindungsgemäßen Verfahrens.

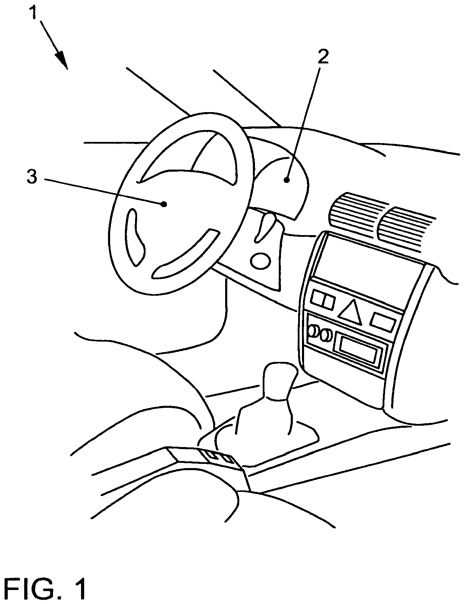

Figur 1 zeigt ein Beispiel einer Innenansicht eines Kraftfahrzeugs 1. In dem Kraftfahrzeug 1 ist hinter einem Lenkrad 3 eine als Kombiinstrument ausgebildete Anzeigeeinrichtung 2 angeordnet, deren Anzeige im Blickfeld bzw. in der Nähe des Blickfeldes des Fahrers liegt.

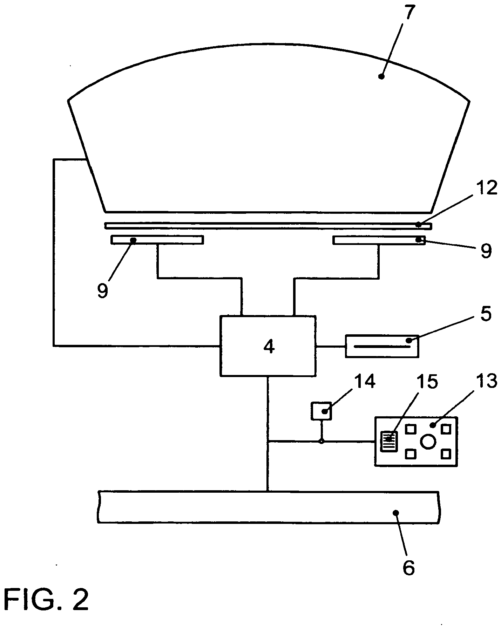

In Figur 2 ist der prinzipielle Aufbau der Anzeigeeinrichtung 2 dargestellt. Die Anzeigeeinrichtung 2 umfasst eine Steuereinrichtung 4, die datentechnisch mit einem Fahrzeugbus 6 verbunden ist. Auf diese Weise können der Steuereinrichtung 4 Daten übertragen werden, aus denen die Steuereinrichtung Graphikdaten für die Anzeige der Anzeigeeinrichtung 2 generieren kann. Ferner kann die Steuereinrichtung 4 auch über andere Schnittstellen Daten empfangen. Beispielsweise kann die Steuereinrichtung 4 direkt mit Sensoren und Steuergeräten des Fahrzeugs oder anderen Einrichtungen zur Erzeugung von Graphikdaten gekoppelt sein.

Des Weiteren ist die Steuereinrichtung 4 mit einem Datenspeicher 5 verbunden, aus dem für die Erzeugung der Graphikdaten erforderliche Daten ausgelesen werden können. Der Datenspeicher 5 kann beispielsweise eine oder mehrere digitale Straßenkarten enthalten. Ferner können in dem Datenspeicher 5 Voreinstellungen, Bildparameter und Stellwerte gespeichert sein.

Des Weiteren ist die Steuereinrichtung 4 mit einer Bedieneinheit 13 verbunden, welche ein Bedienelement 15 oder mehrere Bedienelemente umfasst. Mittels der Bedieneinheit 13 kann ein Nutzer die Anzeigen und Darstellungen der Anzeigeeinrichtung 2 steuern.

Außerdem ist mit der Steuereinrichtung 4 und dem Bedienelement 15 eine Auswahleinheit 14 gekoppelt. Diese Auswahleinrichtung 14 umfasst eine Zeitmesseinheit, die erfasst, wie lange das Bedienelement 15 der Bedieneinrichtung 13 nicht betätigt wurde. Übersteigt dieses Zeitintervall ein in der Auswahleinheit 14 gespeicherten Schwellwert überträgt die Auswahleinheit 4 der Steuereinrichtung 4 einen entsprechenden Hinweis hierauf.

Die Steuereinrichtung ist ferner mit einem frei programmierbaren Display 7 verbunden, welches verschiedene Anzeigebereiche aufweist. Ferner ist die Steuereinrichtung 4 mit zwei elektromechanischen Rundinstrumenten 9 verbunden.

Bei dem Display 7 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 7 ist eine (nicht gezeigte) Hintergrundbeleuchtung zugeordnet, die durch eine oder mehrere lichtemittierende Dioden bereitgestellt werden kann.

Die Steuereinrichtung 4 steuert ferner auf an sich bekannte Weise zwei Rundinstrumente 9, welche z. B. für die Anzeige der Geschwindigkeit und Motordrehzahl vorgesehen sind. Die Rundinstrumente 9 umfassen eine Skala und einen Zeiger, dessen Drehwinkel von einem Steuersignal der Steuereinrichtung 4 bestimmt wird. Für die Rundinstrumente 9 ist jeweils separat eine Beleuchtung vorgesehen, die von dem Steuergerät ein- und ausgeschaltet werden kann. Das die Rundinstrumente 9 abbildende Licht kann vollständig oder teilweise mittels der Kombinationseinrichtung 10 für den Betrachter im Bereich des Displays 7 dargestellt werden. Auf diese Weise können die Rundinstrumente 9 mittels eines Steuersignals der Steuereinrichtung 4 im Bereich des Displays 7 dargestellt oder nicht dargestellt werden.

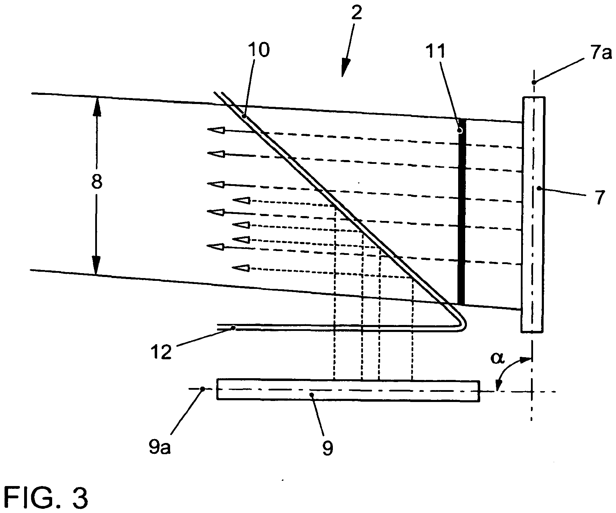

Im Folgenden wird mit Bezug zu Figur 3 die Anordnung des Displays 7, der Rundinstrumente 9 und der Kombinationseinrichtung 10 im Detail erläutert:

Das Display 7 der Anzeigeeinrichtung 2 ist so angeordnet, dass es im unmittelbaren Blickfeld 8 des Fahrers angeordnet ist, wie es in Figur 1 gezeigt ist. Die Rundinstrumente 9 sind in dem in Figur 3 gezeigten Ausführungsbeispiel horizontal unterhalb des Blickfelds 8 des Fahrers angeordnet, so dass sich die von den Rundinstrumenten 9 gebildete Ebene in Blickrichtung 8 des Fahrers auf das Display 7 liegt. Die Rundinstrumente 9 können insbesondere unterhalb des Blickfeldes 8 angeordnet sein. Die Rundinstrumente 9 sind wie in einem herkömmlichen Kombiinstrument aufgebaut und angeordnet. Die Skalen der Rundinstrumente 9 sind selbstleuchtend oder beleuchtet ausgeführt. Sie umfassen einen beleuchteten oder einen selbstleuchtenden drehbaren Zeiger zur Kenntlichmachung des aktuellen Wertes, der angezeigt werden soll.

Die Mittelachsen 7a und 9a des Displays 7 und der Rundinstrumente 9 sind vorteilhafterweise in einem Winkel $\alpha$ von 90° zueinander angeordnet. In einem Winkel von 45° von dem Rundinstrument 9 ist die Kombinationseinrichtung 10 vorgesehen.

Im in Figur 3 gezeigten Ausführungsbeispiel ist die Kombinationseinrichtung 10 ein planarer semitransparenter Spiegel, der für das abbildende Licht des Displays 7 durchlässig ausgebildet ist, so dass ein Betrachter die Anzeige des Displays direkt wahrnimmt. Das abbildende Licht der Rundinstrumente 9 wird von dem semitransparenten Spiegel 10 reflektiert, so dass es für den Betrachter in der Anzeige des Displays 7 als virtuelles Bild 11 vorgelagert erscheint. Zwischen der Kombinationseinrichtung 10 und dem Rundinstrument 9 ist eine Blende 12 aus semitransparentem Material vorgesehen, die für das abbildende Licht der Rundinstrumente 9 durchlässig ausgebildet ist und welche die Rundinstrumente 9 für den Betrachter zumindest im ausgeschalteten Zustand abdeckt. Die Steuereinrichtung 4 kann somit die Rundinstrumente 9 jeweils ein- und ausschalten, so dass sie für den Betrachter vor dem Display 7 dargestellt werden oder nicht dargestellt werden

Im eingeschalteten Zustand der Rundinstrumente 9, d. h. wenn diese leuchten oder beleuchtet werden, erscheint für den Betrachter ein virtuelles Bild 11 der Rundinstrumente 9 vor dem Display 7. Wenn die Rundinstrumente 9 ausgeschaltet sind verschwindet das virtuelle Bild 11 und die Rundinstrumente 9 sind für den Betrachter nicht sichtbar. Die Rundinstrumente 9 können selbstverständlich von der Steuereinrichtung 4 separat ein-und ausgeschaltet werden. Ferner kann die Blende 12 so ausgebildet sein, dass nur bestimmte Bereiche der Rundinstrumente 9 bzw. der zugehörigen Zeiger im virtuellen Bild 11 erscheinen. Im vorliegenden Ausführungsbeispiel jeweils ist nur ein radial äußerer Abschnitt der Zeiger im virtuellen Bild 11 sichtbar.

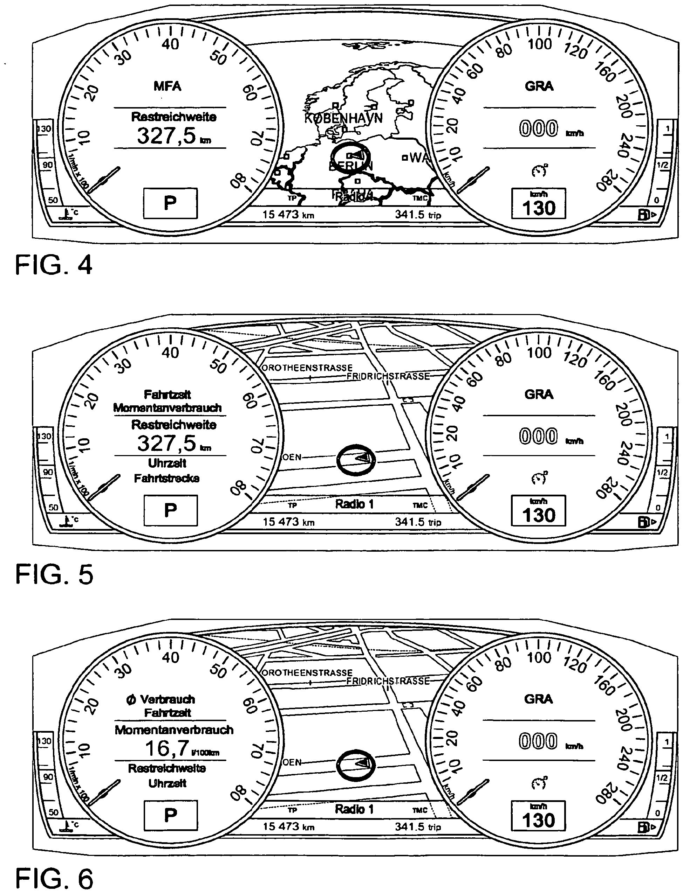

Mit Bezug zu den Figuren 4 bis 9 wird die Anzeige des Displays 7 bei einer Änderung eines Listeneintrags mittels des Bedienelements 15 erläutert:

Die Figur 4 zeigt die Ansicht auf die Anzeige der Anzeigeeinrichtung 2. Innerhalb der Anzeige für die Motordrehzahl befindet sich ein Anzeigebereich für eine Multifunktionsanzeige (MFA). In der Multifunktionsanzeige können verschiedene Listen angezeigt werden, die jeweils Listeneinträge mit zusammengehörigen Parametern umfassen. Zwischen den einzelnen Listen kann mittels eines separaten Bedienelements umgeschaltet werden.

Im vorliegenden Ausführungsbeispiel umfasst die Liste folgende Einträge: Restreichweite, Uhrzeit, Fahrstrecke, Durchschnittsgeschwindigkeit, Durchschnittsverbrauch, Fahrzeit (ab Start), Momentanverbrauch. Den jeweiligen Listeneinträgen sind Zusatzinformationen zugeordnet, die bei einer Auswahl des Listeneintrags angezeigt werden.

In Figur 4 ist ein Ausgangszustand gezeigt, bei dem in der Mitte der Multifunktionsanzeige der Begriff "Restreichweite" als Hinweis auf den aktuellen Listeneintrag angezeigt wird, und darunter die Zusatzinformation zu diesem Listeneintrag, nämlich die Kilometeranzahl.

Im Folgenden wird das Verfahren beschrieben, um von dem in Figur 4 angezeigten Listeneintrag zu einem Eintrag zu gelangen, bei dem die Durchschnittsgeschwindigkeit (ab Start) angezeigt wird.

Die Bedieneinrichtung umfasst als Bedienelement 15 einen Endlosdrehschalter. Dieser Schalter kann gedreht werden, um zwischen Listeneinträgen der aktuellen Liste zu wechseln. Bei der ersten Betätigung des Endlosdrehschalters, z. B. bei einem Hinauf-oder Hinabdrehen, verschwindet die Abkürzung "MFA" für die Multifunktionsanzeige und es erscheinen unterhalb des Bereichs für die Restreichweite und die zugehörige Kilometerzahl die beiden nächsten Einträge der aktuellen Liste und oberhalb dieses Bereichs die beiden vorhergehenden Einträge der Liste. Im vorliegenden Fall erscheinen wie in Figur 5 gezeigt oben die Begriffe "Fahrzeit" und "Momentanverbrauch" und unten die beiden Begriffe "Uhrzeit" und "Fahrtstrecke". Die Anzeige für den aktuellen Listeneintrag "Restreichweite" und der zugehörigen Zusatzinformation bleiben zunächst unverändert. Die weiteren Listeneinträge werden so eingeblendet, dass der aktuelle Listeneintrag hervorgehoben gegenüber den anderen Listeneinträgen erscheint.

Des Weitern wandert z. B. bei einem Drehen des Endlosdrehschalters der hervorgehobene Listeneintrag "Restreichweite" nach unten in Richtung des bisherigen nicht hervorgehoben dargestellten Listeneintrag "Uhrzeit". Dabei geht die Darstellung dieses Listeneintrags von einem hervorgehobenen Zustand in einen nicht hervorgehobenen Zustand über. Gleichzeitig verändern auch die anderen Listeneinträge ihre Position, indem sie um eine Position nach unten wandern. Dabei wandert der Listeneintrag "Momentanverbrauch" von der Position oberhalb des mittleren hervorgehobenen Bereichs in diesen Bereich herein bis er schließlich im mittleren Bereich, wie in Figur 6 gezeigt, hervorgehoben dargestellt ist. Ferner wird in diesem Zustand die Zusatzinformation für diesen neuen hervorgehobenen Listeneintrag angezeigt. Ferner erscheint in der obersten Position ein weiterer neuer Listeneintrag. Der zuletzt auf der untersten Position befindliche Listeneintrag verschwindet.

Durch die Drehung des Drehschalters verändert sich somit die Multifunktionsanzeige in einer Art und Weise, die einem Drehen einer Walze mit den Listeneinträgen entspricht, wobei jeweils ein Listeneintrag auf der Walze hervorgehoben und zusammen mit der zugeordneten Zusatzinformation angezeigt wird. Bei dem Übergang von einem hervorgehobenen Listeneintrag zu einem anderen hervorgehobenen Listeneintrag werden Zwischenbilder angezeigt, so dass die Anzeigebilder nicht abrupt wechseln, sondern ein kontinuierlicher animierter Übergang dargestellt wird. Die Details dieses Übergangs zwischen einem Ausgangszustand und einem Endzustand werden später erläutert.

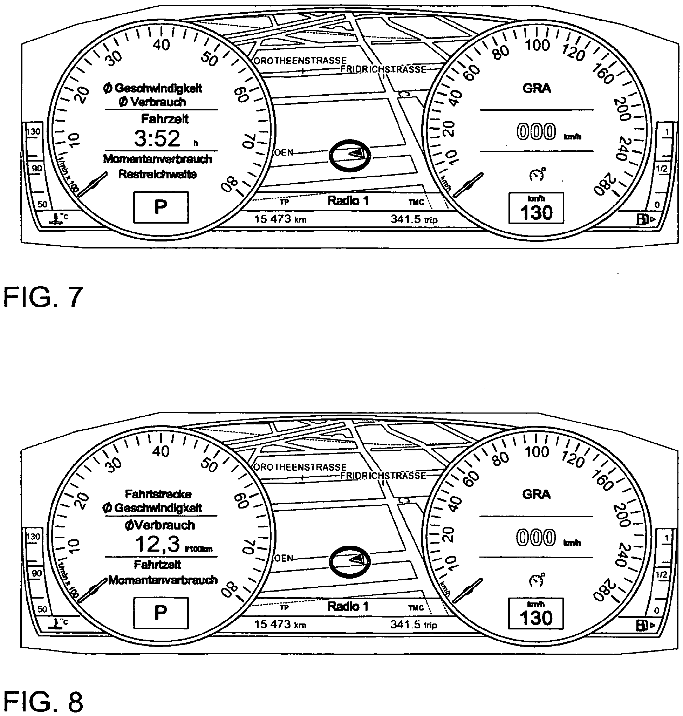

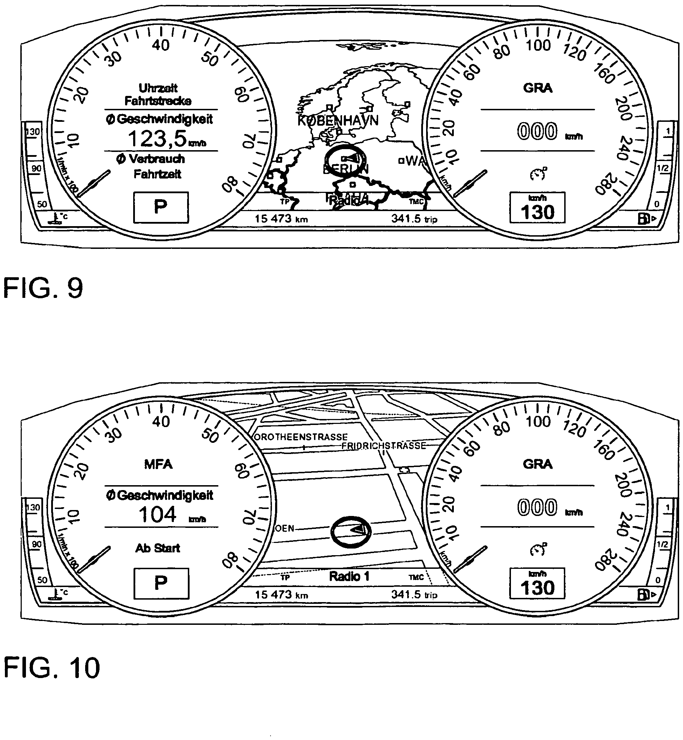

Dreht der Nutzer den Drehschalter weiter nach unten wird als nächstes der Listeneintrag "Fahrzeit", wie in Figur 7 gezeigt, in dem hervorgehobenen Bereich angezeigt, danach der Listeneintrag "Durchschnittsverbrauch", wie in Figur 8 gezeigt, und schließlich der gewünschte Listeneintrag "Durchschnittsgeschwindigkeit", wie in Figur 9, gezeigt. In diesem Zustand wird die Durchschnittsgeschwindigkeit zusammen mit der entsprechenden Geschwindigkeitsangabe hervorgehoben dargestellt. Oberhalb dieser Anzeige werden nicht hervorgehoben die Listeneinträge "Fahrtstrecke" und "Uhrzeit" angezeigt, unterhalb die Listeneinträge "Durchschnittsverbrauch" und "Fahrtzeit".

Wie vorstehend erläutert erfasst die Zeitmesseinheit der Auswahleinheit 14 die Zeitintervalle zwischen zwei aufeinanderfolgenden Betätigungen des Bedienelements 15. Überschreitet dieses Zeitintervall einen im voraus festgelegten Schwellwert interpretiert die Auswahleinheit dies als Auswahl des Listeneintrags, der aktuell hervorgehoben dargestellt wird. Die Auswahleinheit überträgt ein entsprechendes Signal an die Steuereinrichtung 4. Die Steuereinrichtung ändert die Anzeige der Liste daraufhin derart, dass oberhalb und unterhalb des hervorgehobenen Listeneintrags keine Listeneinträge mehr angezeigt werden. Statt dessen wird oberhalb der Hinweise "MFA" angezeigt und in Abhängigkeit von dem ausgewählten Listeneintrag weitere Zusatzinformationen. Dieser Endzustand ist in Figur 10 gezeigt. Für den Listeneintrag "Durchschnittsgeschwindigkeit" wird als zusätzlicher Hinweis "ab Start" unterhalb der Durchschnittsgeschwindigkeit angezeigt.

Die Listeneinträge können auf beliebige Art und Weise hervorgehoben dargestellt werden. In dem vorliegenden Ausführungsbeispiel wird der hervorgehobene Listeneintrag heller und größer angezeigt.

Im Folgenden wird beschrieben, wie der Übergang zwischen zwei Anzeigebildern von einem Ausgangszustand in einen Endzustand, bei dem ein Listeneintrag die Position wechselt und seine Größe verändert, bei dem Ausführungsbeispiel des erfindungsgemäßen Verfahrens visualisiert wird:

Der Bildparameter P1 charakterisiert die geometrische Position eines Listeneintrags, der Bildparameter P2 die Helligkeit und/oder die Skalierung und/oder die Farbe und/oder die Transparenz. Für die Helligkeit, die Skalierung, die Farbe und die Transparenz könnten auch jeweils separate Bildparameter verwendet werden. Mit F1 ist ein Transformationsparameter bezeichnet, der dem Bildparameter P1 zugeordnet ist, mit F2 ein Transformationsparameter, der dem Bildparameter P2 zugeordnet ist. Da die folgende Beschreibung der Veränderung der Anzeigebilder die Bildparameter P1 und P2 und die zugeordneten Transformationsparameter F1 und F2 gleichermaßen betrifft, wird im folgenden einheitlich der Bildparameter mit P und der Transformationsparameter mit F bezeichnet.

Die Zwischenbilder, die zwischen dem Ausgangszustand und dem Endzustand angezeigt werden, werden hinsichtlich des Bildparameters P wie folgt berechnet:

$$P_{n+1} = P_n + (P_m - P_n) \cdot F$$

Der Index n läuft in diesem Fall von 0 bis m. Der Wert des Bildparameters $P_0$ betrifft den Ausgangszustand. Der Bildparameter $P_m$ betrifft den Endzustand. Mittels des Transformationsparameters F kann bestimmt werden, ob sich die Geschwindigkeitsanzeige dem Endzustand direkt annähert oder oszillierend annähert. Ferner können die Beschleunigungen bei der Veränderung des Parameters eingestellt werden. Jeder Wert des Bildparameters $P_0$, $P_1$, $P_2$, ... , $P_m$ charakterisiert ein Zwischenbild. Das Zeitintervall zwischen zwei Zwischenbildern wird konstant gewählt. Die Anzeigebilder werden auf dem Display 1 somit mit einer festen Frequenz angezeigt.

Wird F zwischen 0 und 1 gewählt sind bevorzugte Beispiele für den Transformationsparameter F: F = 0,2, F = 0,5 und F = 0,9. Für F = 0,2 ergibt sich zunächst eine große Beschleunigung für die Annäherung an den Endzustand, die zunehmend abflacht. Insgesamt nähert sich der Bildparameter sehr langsam dem Endzustand an. Für F = 0,3 ergibt sich eine mittelschnelle Annäherung an den Endzustand. Dabei ist die Beschleunigung zunächst relativ groß und verlangsamt sich mit der Zeit zunehmend. Für F = 0,9 ergibt sich eine sehr schnelle und direkte Annäherung an den Endzustand.

Wird F zwischen 1 und 2 gewählt ergibt sich ein oszillierende Annäherungen an den Endzustand. In diesem Fall sind bevorzugte Beispiele für den Transformationsparameter F: F = 1,3 und F = 1,5. Für F = 1,3 ergibt sich eine relativ schnelle oszillierende Annäherung an den Endzustand. Für F = 1,5 sich eine langsamere oszillierende Annäherung an den Endzustand.

Eine oszillierende Annäherung an den Endzustand ergibt eine Veränderung des Anzeigebildes, welche für den Betrachter sehr natürlich und wenig technisch erscheint. Es entspricht einem Federn, wie es der Betrachter von Vorgängen in seiner natürlichen Umgebung kennt. Hierdurch kann der Betrachter die Veränderung des Anzeigebildes leichter nachvollziehen, wodurch ihm die Orientierung beim Übergang vom Anfangszustand zum Endzustand erleichtert wird.

## BEZUGSZEICHENLISTE

1     Kraftfahrzeug
2     Anzeigeeinrichtung
3     Lenkrad
4     Steuereinrichtung
5     Datenspeicher

6      Fahrzeugbus
7      Display
8      Blickfeld
9      Rundinstrument
9a     Mittelachse des Rundinstruments
10     Kombinationseinrichtung
11     virtuelles Bild
12     Blende
13     Bedieneinheit
14     Auswahleinheit
15     Bedienelement

**Patentansprüche**

1.  Verfahren zum Auswählen eines Listeneintrags aus einer Liste mit mehreren Listeneinträgen mittels eines Bedienelements (15) und einer Anzeigeeinrichtung (2) zum Anzeigen von den Betrieb des Fahrzeugs betreffenden Informationen, wobei den Listeneinträgen jeweils Zusatzinformationen zugeordnet sind, bei dem

    - durch Betätigung des Bedienelements (15) ein bestimmter Listeneintrag in einen Zustand gebracht wird, in dem er gegenüber zumindest einem anderen Listeneintrag hervorgehoben dargestellt wird,
    - wobei sich die Positionen der dargestellten Listeneinträge verändern, wenn ein Listeneintrag durch die Betätigung des Bedienelements (15) in den Zustand gebracht wird, in dem er gegenüber zumindest einem anderen Listeneintrag hervorgehoben dargestellt wird und
    - wobei bei einer Hervorhebung eines Listeneintrags die diesem Listeneintrag zugeordnete Zusatzinformation automatisch angezeigt wird und
    - der hervorgehobene Listeneintrag automatisch ausgewählt wird, wenn das Bedienelement (15) für ein definiertes Zeitintervall nicht betätigt wurde.

2.  Verfahren nach Anspruch 1,
    **dadurch gekennzeichnet,**
    **dass** in einem Ausgangszustand ein Listeneintrag und/oder die zu diesem Listeneintrag zugeordnete Zusatzinformation angezeigt wird/werden.

3.  Verfahren nach Anspruch 2,
    **dadurch gekennzeichnet,**
    **dass** durch eine erste Betätigung des Bedienelements (15) der Listeneintrag des Ausgangszustands und zumindest ein weiterer Listeneintrag dargestellt wird, wobei der Listeneintrag des Ausgangszustands gegenüber dem anderen Listeneintrag hervorgehoben dargestellt wird.

4.  Verfahren nach einem der vorhergehenden Ansprüche,
    **dadurch gekennzeichnet,**
    **dass** Listeneinträge verschwinden und neue Listeneinträge dargestellt werden, wenn ein Listeneintrag durch die Betätigung des Bedienelements (15) in den Zustand gebracht wird, in dem er gegenüber zumindest einem anderen Listeneintrag hervorgehoben dargestellt wird.

5.  Verfahren nach einem der vorhergehenden Ansprüche,
    **dadurch gekennzeichnet,**
    **dass** sich bei der Veränderung der Position eines Listeneintrags der Listeneintrag von einem ersten Teilbereich des Anzeigebildes zu einem zweiten Teilbereich des Anzeigebildes wandert, wobei beim Übergang vom Ausgangszustand zum Endzustand Zwischenbilder angezeigt werden, deren Position wie folgt berechnet wird:

$$P1_{n+1} = P1_n + (P1_m - P1_n) * F1,$$

wobei n eine natürliche Zahl ist und von 0 bis m läuft, $P1_0$ die Position des Listeneintrags im Ausgangszustand ist, $P1_m$ die Position des Listeneintrags im Endzustand ist, und F1 ein Transformationsparameter ist, für den gilt:

$$0 < F1 < 1 \text{ oder } 1 < F1 < 2.$$

6. Verfahren nach Anspruch 5,
**dadurch gekennzeichnet,**
**dass** sich beim Übergang eines Listeneintrags von einem nicht hervorgehobenen Zustand in einen hervorgehobenen Zustand die Helligkeit und/oder die Skalierung und/oder die Farbe und/oder die Transparenz von einem Ausgangszustand zu einem Endzustand verändert, wobei sich ein Bildparameter für die Helligkeit und/oder die Skalierung und/oder die Farbe und/oder die Transparenz verändert, der wie folgt berechnet wird:

$$P2_{n+1} = P2_n + (P2_m - P2_n) * F2,$$

wobei n eine natürliche Zahl ist und von 0 bis m läuft, $P2_0$ der Bildparameter des Listeneintrags im Ausgangszustand ist, $P2_m$ der Bildparameter des Listeneintrags im Endzustand ist, und F2 ein Transformationsparameter ist, für den gilt:

$$0 < F2 < 1 \text{ oder } 1 < F2 < 2.$$

7. Bedieneinrichtung in einem Fahrzeug umfassend:

- ein Bedienelement (15) zum Auswählen eines Listeneintrags aus einer Liste mit mehreren Listeneinträgen,
- eine Anzeigeeinrichtung (2) zum Anzeigen von den Betrieb des Fahrzeugs betreffende Informationen, wobei die Anzeigeeinrichtung (2)
- eine Steuereinrichtung (4) umfasst, welche mit dem Bedienelement (15) datentechnisch gekoppelt ist und welche die Anzeige steuert, und
- eine Auswahleinheit (14), die eine Zeitmesseinheit aufweist, mit der erfassbar ist, wie lange das Bedienelement (15) nicht betätigt wurde, wobei die Auswahleinheit (14) so ausgebildet ist, dass sie einen hervorgehobenen Listeneintrag automatisch auswählt, wenn das Bedienelement (15) für ein definiertes Zeitintervall nicht betätigt wurde,
**dadurch gekennzeichnet,**
- **dass** die Steuereinrichtung (4) so ausgebildet ist, dass bei einer Betätigung des Bedienelements (15) ein bestimmter Listeneintrag in einen Zustand bringbar ist, in dem er gegenüber zumindest einem anderen Listeneintrag hervorgehoben dargestellt wird, wobei sich die Positionen der dargestellten Listeneinträge verändern, wenn ein Listeneintrag durch die Betätigung des Bedienelements (15) in den Zustand gebracht wird, in dem er gegenüber zumindest einem anderen Listeneintrag hervorgehoben dargestellt wird, und wobei bei einer Hervorhebung eines Listeneintrags die diesem Listeneintrag zugeordnete Zusatzinformation automatisch angezeigt wird.

8. Bedieneinrichtung nach Anspruch 7,
**dadurch gekennzeichnet,**
**dass** das Bedienelement (15) ein Drehschalter oder Wippschalter ist.

9. Bedieneinrichtung nach Anspruch 7,
**dadurch gekennzeichnet,**
**dass** das Bedienelement (15) ein Endlosdrehschalter ist.

**Claims**

1. Method for selecting a list entry from a list having a plurality of list entries using an operator control element (15) and a display device (2) for displaying information relating to the operation of the vehicle, wherein the list entries each have associated supplementary information, in which

- operating the operator control element (15) puts a particular list entry into a state in which it is presented in highlighted form in comparison with at least one other list entry,

- wherein the positions of the presented list entries are altered when a list entry is put into the state in which it is presented in highlighted form in comparison with at least one other list entry by the operation of the operator control element (15), and

- wherein when a list entry is highlighted the supplementary information associated with said list entry is automatically displayed, and

- the highlighted list entry is automatically selected when the operator control element (15) has not been operated for a defined period of time.

2. Method according to Claim 1,
**characterized**
**in that** a list entry and/or the supplementary information associated with said list entry is/are displayed in an initial state.

3. Method according to Claim 2,
**characterized**
**in that** first operation of the operator control element (15) presents the list entry from the initial state and at least one further list entry, wherein the list entry from the initial state is presented in highlighted form in comparison with the other list entry.

4. Method according to one of the preceding claims,
**characterized**
**in that** list entries disappear and new list entries are presented when a list entry is put into the state in which it is presented in highlighted form in comparison with at least one other list entry by the operation of the operator control element (15).

5. Method according to one of the preceding claims,
**characterized**
**in that** when the position of a list entry is altered the list entry migrates from a first subregion of the display image to a second subregion of the display image, wherein the change from the initial state to the final state involves intermediate images being displayed, the position of which is calculated as follows:

$$P1_{n+1} = P1_n + (P1_m - P1_n) * F1,$$

wherein n is a natural number and ranges from 0 to m, $P1_0$ is the position of the list entry in the initial state, $P1_m$ is the position of the list entry in the final state, and F1 is a transformation parameter, for which the following applies:

$$0 < F1 < 1 \text{ or } 1 < F1 < 2.$$

6. Method according to Claim 5,
**characterized**
**in that** when a list entry changes from an unhighlighted state to a highlighted state the brightness and/or the scaling and/or the colour and/or the transparency is altered from an initial state to a final state, wherein an image parameter for the brightness and/or the scaling and/or the colour and/or the transparency is altered which is calculated as follows:

$$P2_{n+1} = P2_n + (P2_m - P2_n) * F2,$$

wherein n is a natural number and ranges from 0 to m, $P2_0$ is the image parameter of the list entry in the initial state, $P2_m$ is the image parameter of the list entry in the final state, and F2 is a transformation parameter, for which the following applies:

$$0 < F2 < 1 \text{ or } 1 < F2 < 2.$$

**7.** Operator control device in a vehicle comprising:

- an operator control element (15) for selecting a list entry from a list having a plurality of list entries,
- a display device (2) for displaying information relating to the operation of the vehicle, wherein the display device (2) comprises
- a control device (4), which is coupled to the operator control element (15) for data purposes and which controls the display, and
- a selection unit (14), which has a chronometric unit which can be used to record for how long the operator control element (15) has not been operated, wherein the selection unit (14) is designed such that it automatically selects a highlighted list entry when the operator control element (15) has not been operated for a defined period of time,
**characterized**
- **in that** the control device (4) is designed such that when the operator control element (15) is operated a particular list entry can be put into a state in which it is presented in highlighted form in comparison with at least one other list entry, wherein the positions of the presented list entries are altered when a list entry is put into the state in which it is presented in highlighted form in comparison with at least one other list entry by the operation of the operator control element (15), and wherein when a list entry is highlighted the supplementary information associated with said list entry is automatically displayed.

**8.** Operator control device according to Claim 7,
**characterized**
**in that** the operator control element (15) is a rotary switch or a rocker switch.

**9.** Operator control device according to Claim 7,
**characterized**
**in that** the operator control element (15) is a continuous rotary switch.

**Revendications**

**1.** Procédé pour sélectionner un élément de liste dans une liste comportant plusieurs éléments de liste au moyen d'un organe de commande (15) et d'un dispositif d'affichage (2) pour afficher des informations concernant le fonctionnement du véhicule, des informations complémentaires étant respectivement attribuées aux éléments de liste, dans lequel

- la manoeuvre de l'organe de commande (15) place un élément de liste défini dans un état dans lequel il est représenté en relief vis-à-vis d'au moins un autre élément de liste,
- dans lequel les positions des éléments de liste représentés changent lorsque la manoeuvre de l'organe de commande (15) place un élément de liste dans l'état dans lequel il est représenté en relief vis-à-vis d'au moins un autre élément de liste,
- dans lequel la mise en relief d'un élément de liste affiche automatiquement l'information complémentaire attribuée à cet élément de liste et
- l'élément de liste mis en relief est sélectionné automatiquement lorsque l'organe de commande (15) n'a pas été manoeuvré pendant un intervalle de temps défini.

**2.** Procédé selon la revendication 1,
**caractérisé en ce que** dans un état de sortie, on affiche un élément de liste et/ou l'information complémentaire attribuée à cet élément de liste.

**3.** Procédé selon la revendication 2,
**caractérisé en ce qu'**une première manoeuvre de l'organe de commande (15) représente l'élément de liste de l'état de sortie et au moins un autre élément de liste, l'élément de liste de l'état de sortie étant représenté en relief vis-à-vis de l'autre élément de liste.

**4.** Procédé selon une des revendications précédentes, **caractérisé en ce que** des éléments de liste disparaissent et que de nouveaux éléments de liste sont affichés lorsque la manoeuvre de l'organe de commande (15) place un élément de liste dans l'état dans lequel il est représenté en relief vis-à-vis d'au moins un autre élément de liste.

**5.** Procédé selon une des revendications précédentes, **caractérisé en ce que** lors du changement de position d'un élément de liste, l'élément de liste migre d'une première région partielle de l'image d'affichage à une deuxième région partielle de l'image d'affichage, le passage de l'état de sortie à l'état final entraînant l'affichage d'images intermédiaires dont la position est calculée de la manière suivants :

$$P1_{n+1} = P1_n + (P1_m - P1_n) * F1,$$

n étant un nombre naturel compris entre 0 et m, $P1_0$ étant la position de l'élément de liste dans l'état de sortie, $P1_m$ étant la position de l'élément de liste dans l'état final, et F1 étant un paramètre de transformation satisfaisant à :

$$0 < F1 < 1 \text{ ou } 1 < F1 < 2.$$

**6.** Procédé selon la revendication 5, **caractérisé en ce que** lors de la migration d'un élément de liste d'un état non en relief à un état en relief, la brillance et/ou l'échelle et/ou la couleur et/ou la transparence passe d'un état de sortie à un état final, alors qu'un paramètre d'image pour la brillance et/ou l'échelle et/ou la couleur et/ou la transparence change, celui-ci étant calculé de la manière suivants :

$$P2_{n+1} = P2_n + (P2_m - P2_n) * F2,$$

n étant un nombre naturel compris entre 0 et m, $P2_0$ étant le paramètre d'image de l'élément de liste dans l'état de sortie, $P2_m$ étant le paramètre d'image de l'élément de liste dans l'état final, et F2 étant un paramètre de transformation satisfaisant à :

$$0 < F2 < 1 \text{ ou } 1 < F2 < 2.$$

**7.** Dispositif de commande dans un véhicule comprenant :

- un organe de commande (15) pour sélectionner un élément de liste d'une liste comportant plusieurs éléments de liste
- un dispositif d'affichage (2) pour afficher des informations concernant le fonctionnement du véhicule, le dispositif d'affichage (2) comprenant
- un dispositif de pilotage (4) dont les données techniques sont accouplées à l'organe de commande (15) et qui pilote l'affichage, et
- une unité de sélection (14) comportant une unité de chronométrage permettant de déterminer la durée pendant laquelle l'organe de commande (15) n'a pas été manoeuvré, l'unité de sélection (14) étant développée de telle sorte qu'elle sélectionne automatiquement un élément de liste en relief lorsque l'organe de commande (15) n'a pas été manoeuvré pendant un certain intervalle de temps,
**caractérisé en ce que**
- le dispositif de pilotage (4) est développé de telle sorte que la manoeuvre de l'organe de commande (15) puisse placer un élément de liste défini dans un état dans lequel il est représentée en relief vis-à-vis d'au moins un autre élément de liste, les positions des éléments de liste représentés changeant lorsque la manoeuvre de l'organe de commande (15) place un élément de liste dans l'état dans lequel il est représenté en relief vis-à-vis d'au moins un autre élément de liste, la mise en relief d'un élément de liste affichant automatiquement l'information complémentaire attribuée à cet élément de liste.

**8.** Dispositif de commande selon la revendication 7, **caractérisé en ce que** l'organe de commande (15) est un commutateur rotatif ou un commutateur bistable.

**9.** Dispositif de commande selon la revendication 7, **caractérisé en ce que** l'organe de commande (15) est un commutateur rotatif sans fin.

FIG. 1

FIG. 2

FIG. 3

FIG. 4

FIG. 5

FIG. 6

FIG. 7

FIG. 8

## FIG. 9

## FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0240307 A1
- DE 10056307 A1